# EUROPÄISCHE PATENTSCHRIFT

(11) **EP 0 754 090 B1**
(45) Veröffentlichungstag und Bekanntmachung des Hinweises auf die Patenterteilung: **08.07.1998**
(21) Anmeldenummer: 95916606.7
(22) Anmeldetag: 05.04.1995
(51) Int. Cl.: B01D 53/70, B01D 53/96, A62D 3/00, C22B 21/00

(54) **Verfahren zur Gewinnung von Sekundäraluminium**
Method for obtaining secondary aluminium
Procédé d'obtention d'aluminium secondaire

(30) Priorität: 06.04.1994 AT 709/94
(43) Veröffentlichungstag der Anmeldung: 22.01.1997
(73) Patentinhaber: Austria Metall AG, A-5282 Ranshofen (AT)
(72) Erfinder: DUCHACZEK, Hubert, A-4040 Linz (AT); WACHTER, Reinhard, A-5283 Braunau (AT); WAGNER, Josef, A-5282 Ranshofen (AT)
(74) Vertreter: Kilian, Helmut, Dr.
(86) Internationale Anmeldenummer: EP9501244
(87) Internationale Veröffentlichungsnummer: WO9527555

(56) Entgegenhaltungen:
- DE-C- 4 109 991
- DE-C- 4 221 239
- FR-A- 2 114 417
- US-A- 4 065 271
- US-A- 4 368 070
- DATABASE WPI Section Ch, Week 9209 Derwent Publications Ltd., London, GB; Class E34, AN 92-065595 & DD,A,294 187 ( VEB INGENIEUR ANL) , 26.September 1991
- DATABASE WPI Section Ch, Week 8246 Derwent Publications Ltd., London, GB; Class E36, AN 82-99414E & SU,A,899 101 ( DON POLY) , 26.Januar 1982

## Beschreibung

Die Erfindung betrifft ein Verfahren zur Gewinnung von Sekundäraluminium.

Das erfindungsgemäße Verfahren ist hinsichtlich der Abgasreinigung jenen Reinigungsmethoden zuzurechnen, bei denen der aus dem Ofen kommende Abgasstrom erst mit Zuschlagstoffen versetzt wird und in weiterer Folge in einem Abscheider wieder von Stäuben und Tröpfchen gereinigt wird.

Als Abscheider dienen beispielsweise Gewebefilter, Schlauchfilter, Zyklone, elektrostatisch wirkende Abscheider oder Naßabscheider.

Die Zuschlagstoffe verbessern die Abscheidung von Schadstoffen wie z.B. Metalloxiden, sauren Komponenten, organischen Kohlenwasserstoffen, Dioxinen (PCDD) und Furanen (PCDF), bzw. erschweren sie die Bildung von bestimmten Schadstoffen.

Meist wirken die Zuschlagstoffe durch die Adsorption von Schadstoffen, also durch Anlagerung oder Bindung von Schadstoffen an einer spezifisch großen Oberfläche. Manchmal bewirken die Zuschlagstoffe auch eine chemische Umwandlung von Schadstoffen oder eine Blockierung von Katalysatoren, welche zur Bildung von Schadstoffen führen.

Die Zuschlagstoffe werden im Abscheider zusammen mit im Abgas von vornherein vorhanden Stoffen wieder abgeschieden.

Häufig wird das ofenheiße Abgas vor dem Eintritt in den Abscheider auch gequencht. Dabei wird über Düsen eine Flüssigkeit, zumeist eine wässerige basische Lösung, in den Abgaskanal eingesprüht. Mit der Flüssigkeit können auch die Zuschlagstoffe in gelöster oder dispergierter Form eingebracht werden. Die Flüssigkeit verdampft und kühlt das Abgas dadurch sehr rasch unter jenen kritischen Temperaturbereich ab, in welchem PCDD/PCDF gebildet werden. Dadurch, daß die Flüssigkeit basisch ist, werden saure Komponenten im Abgasstrom neutralisiert.

Bekannte Zuschlagstoffe, welche häufig in Kombination miteinander, entweder mit Wasser oder als Staub, auch in Verbindung mit Stoffen mit denen sie üblicherweise vorkommen, zugesetzt werden, sind Aktivkohle, Kalk (CaCO₃), Kalkhydrat (Ca(OH)₂), Magnesiumverbindungen (MgO, MgCO₃...) Natriumkarbonat (Na₂CO₃) und NH-Verbindungen.

Problematisch an den bekannten Methoden ist, daß häufig die Abscheiderate von PCDD/PCDF nicht ausreichend ist. (Z.B. deswegen, weil Kupfer-, Magnesium- und Kalziumverbindungen bei der Bildung von PCDD/PCDF als Katalysator wirken können.)

Durch Zugabe eines hohen Anteiles an Aktivkohle kann zwar PCDD/PCDF gut abgeschieden werden, der dabei anfallende Filterrückstand kann aber nicht einfach rezykliert werden, sondern muß als Gefahrenstoff kostenaufwendig behandelt oder deponiert werden. Filterrückstand mit hohem Aktivkohleanteil kann zudem zur Selbstendzündung neigen.

Die der Erfindung zugrunde liegende Aufgabe besteht demgegenüber darin, ein Verfahren zur Gewinnung von Sekundäaluminium, mit einer vorteilhaften Nutzungsmöglichkeit als Rohstoff für den dabei anfallenden Filterrückstand bereitzustellen.

Die Aufgabe wird mit einem Verfahren mit den Merkmalen des Anspruchs 1 gelöst. Dem Abgas werden alkalische Stoffe, welche als Kationen Natrium oder Kalium enthalten, zugegeben, in weiterer Folge wird gefiltert und der dabei anfallende Filterrückstand dem beim Einschmelzen von Aluminiumschrott verwendeten Abdecksalz zusätzlich zugegeben.

Die alkalischen Zuschlagstoffe können beispielsweise Natriumhydroxid, Natriumcarbonat, Natriumhydrogencarbonat, Natriumsulfid (Na₂S), Natriumsulfit (Na₂SO₃) oder analoge Verbindungen auf Kaliumbasis oder Mischungen dieser Komponenten sein. Sie können in fester (staubförmiger) Form oder in Form einer wässerigen Lösung oder teilweise in fester Form und teilweise in Form einer wässerigen Lösung über Düsen in den Abgaskanal zugegeben werden.

Durch den alkalischen Charakter der eingebrachten Zusatzstoffe werden bei hohen Temperaturen chlororganische Verbindungen wie z.B. PCDD/PCDF zerstört, bzw. wird deren Bildung verhindert.

Der Filterrückstand besteht dann zu einem hohen Anteil aus Alkalihalogeniden, insbesondere aus Verbindungen von Natrium oder Kalium mit Chlor, in geringerem Maße auch mit Fluor und aus unumgesetzten Zuschlagstoffen.

Das sind genau jene Stoffe, welche als Abdecksalz beim Erschmelzen von Sekundäraluminium vor allem in Drehtrommelöfen zum Einsatz kommen. Dieses Abdecksalz hat den Zweck als Flußmittel die Oxydhaut an der Oberfläche der eingesetzten Aluminiumstücke anzulösen, die Oxydation der Aluminiumschmelze zu erschweren und bestimmte Verunreinigungen aufzunehmen. In einem üblichen, zum Erschmelzen von Sekundäraluminium verwendeten Drehtrommelofen ist das Gewichtsverhältnis von Einsatzmaterial zu Abdecksalz etwa 4:1. Das Einsatzmaterial besteht aus Aluminium und Verunreinigungen, es setzt sich aus Aluminiumschrott, Aluminiumspänen und aluminiumhältiger Ofenkrätze von Aluminiumgießöfen zusammen.

Naheliegenderweise ist das erfindungsgemäße Verfahren dann besonders vorteilhaft anzuwenden, wenn es um die Reinigung des Ofenabgases geht, welches beim Erschmelzen von Sekundäraluminium in Drehtrommelöfen entsteht. Der im Rahmen einer Chargierung des Ofens anfallende Filterrückstand kann bei einer späteren Chargierung wieder dem erforderlichen Abdecksalz zugegeben werden. Der Filterrückstand braucht dazu nur im unmittelbaren Betriebsbereich transportiert zu werden. Wenn das Ofenabgas aus einem Drehtrommelofen in welchem unter Verwendung von Abdecksalz Sekundäraluminium erschmolzen wird, erfindungsgemäß gereinigt wird, so fällt etwa ein Zehntel bis ein Fünftel des Gewichtes des Abdecksalzes wieder als Filterrückstand an. D.h. man erspart sich den Zukauf von einem Zehntel bis einem Fünftel des erforderlichen Abdecksalzes.

Unter den Verbrennungsbedingungen im Drehtrommelofen werden die mit dem Filterrückstand miteingebrachten organischen Verbindungen zerstört, sodaß sie sich nicht negativ auswirken. Die sonstigen damit eingebrachten Verunreinigungen wie z.B. Schwermetalloxide, werden durch Aluminium zu Metallen reduziert, welche dann in Aluminium gelöst sind dort normale, erwünschte Legierungselemente bilden.

Der Filterrückstand wird also durch die Verwendung als Abdecksalz beim Erschmelzen von Sekundäraluminium einer sinnvollen Verwendung zugeführt und braucht nicht aufwendig entsorgt zu werden.

Wenn die alkalischen Zuschlagstoffe zumindest teilweise mit einer wässerigen Lösung in den Abgaskanal eingesprüht werden, d.h. wenn damit gequencht wird, so wird damit das Abgas rasch abgekühlt. Dadurch kann rasch unter jenen Temperaturbereich abgekühlt werden in welchem sich PCDD/PCDF bilden. Beim Verdampfen des Wassers werden die alkalischen Zuschlagstoffe als feiner Staub mit einer sehr hohen spezifischen Oberfläche (große Oberfläche pro Masse) erzeugt. Diese spezifische Oberfläche ist größer als wenn die Zuschlagstoffe schon staubförmig in den Abgaskanal eingebracht werden. Die Konzentration der alkalischen Zuschlagstoffe in der wässerigen Lösung liegt zwischen 1 und 50% der Sättigungskonzentration. Bei zu hoher Konzentration besteht die Gefahr, daß die Düsen, durch welche die Lösung in den Abgaskanal eingesprüht werden, zuwachsen.

Die Menge der alkalischen Zuschlagstoffe im Verhältnis zur Menge des Abgases richtet sich nach der Menge und Art der Verunreinigungen im Abgas. Damit eine gute Reinigungswirkung erzielt wird und auch der anfallende Filterrückstand die gewünschte Zusammensetzung, nämlich einen Überschuß an alkalischen Komponenten hat, sind 0,01 bis 5 Gramm alkalische Zuschlagstoffe pro Nm³ ("Normkubikmeter") Abgas erforderlich. Im längeren zeitlichen Mittel sind im Normalfall etwa 0,5 bis 0,6 Gramm Zuschlagstoffe pro Normkubikmeter Abgas erforderlich.
- Fig. 1: - zeigt eine Verfahrensskizze des erfindungsgemäßen Verfahrens, wobei das Abgas aus zwei Trommelöfen behandelt wird und die Zuschlagstoffe sowohl in wässeriger Lösung als auch in Staubform in den Abgaskanal eingesprüht werden.
- Fig. 2: - zeigt das Verfahren von Fig. 1, wobei zusätzlich noch Emulsion in den Abgaskanal eingesprüht wird.
- Fig. 3: - zeigt das Verfahren von Fig. 1, wobei zusätzlich noch synthetischer Ruß in den Abgaskanal eingesprüht wird.

In Trommelöfen 1 werden Aluminiumschrott (Dosen, Verpackungsfolien, Blechabfälle,...), Ofenkrätze (schwimmt in Aluminiumgießöfen auf der Schmelze) und Aluminiumspäne (sind mit Emulsionen von Metallbearbeitungsmaschinen verschmutzt) unter Anwesenheit von Abdecksalz eingeschmolzen. Aus einem Behälter 2 werden durch eine Pumpe 3 die erfindungsgemäßen alkalischen Zuschlagstoffe in wässeriger Lösung über Düsen 4 in den von den Trommelöfen 1 wegführenden Abgaskanal eingesprüht.

An einer in Strömungsrichtung knapp danach liegenden Stelle des Abgaskanales wird die Temperatur des nunmehr gequenchten Abgases gemessen. Abhängig von dieser Temperatur wird die Förderpumpe 3 auf eine größere oder kleinere Förderleistung eingestellt, sodaß die Abgastemperatur an der Meßstelle etwa konstant bei idealerweise 200°C bis 220°C liegt.

Aus einem weiteren Behälter 11 werden erfindungsgemäße alkalische Zuschlagstoffe in staubförmigem Zustand in den Abgaskanal eingeblasen.

Das Abgas gelangt in weiterer Folge in den Schlauchfilter 6 wo Filterrückstand abgeschieden wird. Der angefallene Filterrückstand wird in einem Behälter 7 mit Abdecksalz vermischt und gemeinsam mit diesem bei einer weiteren Chargierung wieder den Trommelöfen 1 zugegeben.

Da der Filterrückstand wegen seiner Staubform gesundheitsgefährlich sein kann, sollte er entweder nur in von der Umgebungsluft abgeschlossenen Systemen transportiert und gehandhabt werden, oder er sollte zu gröberen Teilen verpreßt oder brikettiert werden.

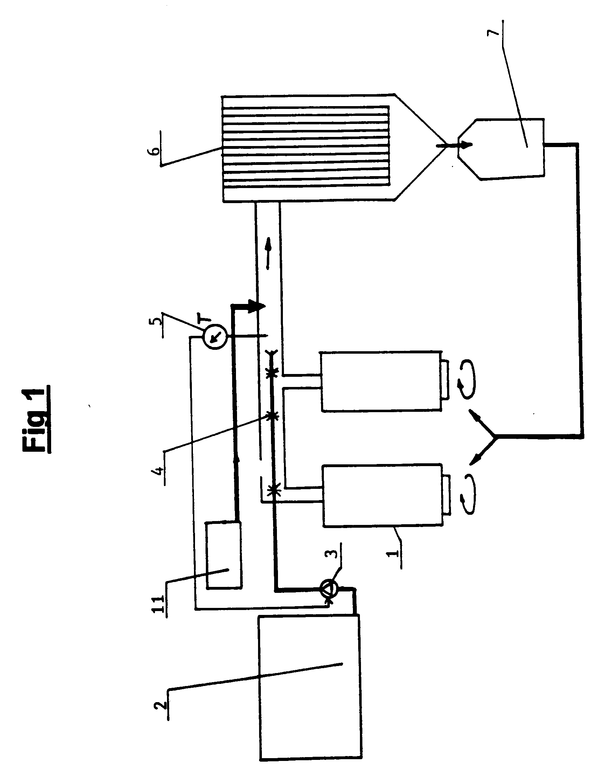

Bei einem typischen Anwendungsbeispiel, auf welches die Fig. 1 zutrifft, werden zwei gasbeheizte Trommelöfen mit jeweils zwölf Tonnen Einsatzmaterial, welches sich zu etwa gleichen Teilen aus Ofenkrätze von Aluminiumgießöfen, Spänen und Aluminiumschrott zusammensetzt, beschickt und das Einsatzmaterial wird aufgeschmolzen. Als Abdecksalz werden je drei Tonnen Salz zugegeben. Die Abgase von beiden Öfen werden in einer Leitung zusammengefaßt und in einem gemeinsamen Schlauchfilter von Stäuben und Tröpfchen gereinigt. Vor dem Schlauchfilter wird die Abgastemperatur durch passend rasches Einsprühen einer fünfprozentigen Sodalösung (Wasser + Na₂CO₃) aus insgesamt drei Düsen auf 200-220°C geregelt. Es ergibt sich ein Bedarf von Sodalösung von durchschnittlich 300 l pro Stunde. Es wird auch 2 kg/h Natriumkarbonat (Na₂CO₃) in Staubform zugegeben. Nach etwa vier Stunden kann das erschmolzene Sekundäraluminium abgestochen werden. Das auf der Schmelze schwimmende Abdecksalz wird getrennt abgezogen.

Es fallen etwa 1000 kg Filterrückstand an. Der Filterrückstand wird über eine Förderschnecke verdichtet und in vergröberter Form einer später verwendeten Charge Abdecksalz zugemischt, sodaß die Mischung das gleiche Gewicht hat, wie die ursprünglich eingesetzte Menge Abdecksalz. Diese Charge Abdecksalz, welche sich nun aus neuem Salz und Filterrückstand von der früheren Ofenbeschickung zusammensetzt, wird bei einer Vergleichschargierung, bei welcher die gleiche Menge gleichartigen Einsatzmateriales eingesetzt wird, zugegeben.

Vergleichsmessungen zeigen, daß hinsichtlich der Zusammensetzung des anfallenden Filterrückstandes, des gefilterten Abgases (des "Reingases") und des schließlich abzuleerenden verbrauchten Abdecksalzes, sowie hinsichtlich der Qualität des erschmolzenen Sekundäraluminiums keine nennenswerten Unterschiede zwischen den beiden verglichenen Chargierungen festzustellen sind. Daraus folgt, daß der Filterrückstand, welcher bei der Reinigung des Abgases, welches beim Erschmelzen von Sekundäraluminium entsteht, anfällt, wieder zur Gänze innerhalb der gleichen Anlage dem Abdecksalz zugegeben werden kann.

Wird auch zugelieferter Filterrückstand, welcher erfindungsgemäß angefallen ist, dem Abdecksalz beigemischt, so wird es erforderlich die resultierende Zusammensetzung des tatsächlich eingesetzten Abdecksalzes zu beachten. Je stärker die Zusammensetzung des beigemischten Filterrückstandes von der idealen Zusammensetzung des Abdecksalzes abweicht, desto weniger Filterrückstand darf dem Abdecksalz zugemischt werden.

Mindestens 75% des resultierenden, tatsächlich eingesetzten Abdecksalzes muß tatsächlich Salz, (NaCl oder KCl) sein.

Die folgende Tabelle zeigt Obergrenzen einiger Verunreinigungen im Abdecksalz:

| **Verunreinigung:** | **Obergrenze (Gew.-%)** |
|---|---|
| Oxide gesamt: | 20% |
| Fe₂O₃ | 2% |
| SiO₂ | 2% |
| CaO + MgO | 5% |
| ZnO | 0,5% |
| Summe sonstiger Oxide | 0,5% |
| H₂O | 2% |
| Schwefelverbindungen | 2% |
| Stickstoffverbindungen | 2% |

Im Bedarfsfall kann die Reinigung des Abgases noch verbessert werden indem vor der Filterstufe weitere reinigend wirkende Zuschlagstoffe in den Abgaskanal eingebracht werden. Diese Zuschlagstoffe müssen so beschaffen und dosiert sein, daß sie die Weiterverwendbarkeit des Filterrückstandes als Abdecksalz nicht verhindern. Aktivkohle darf nur maximal im Ausmaß von etwa 10% des Gewichtes der alkalischen Zuschlagstoffe zugegeben werden, da andernfalls der Filterrückstand eventuell brennbar wird. Es dürfen auch nur maximal 5% Kalziumverbindungen als Verunreinigungen enthalten sein, da Kalziumverbindungen die Eigenschaften des Abdecksalzes, vor allem hinsichtlich dessen derzeit üblicher Entsorgung, ungünstig beeinflussen.

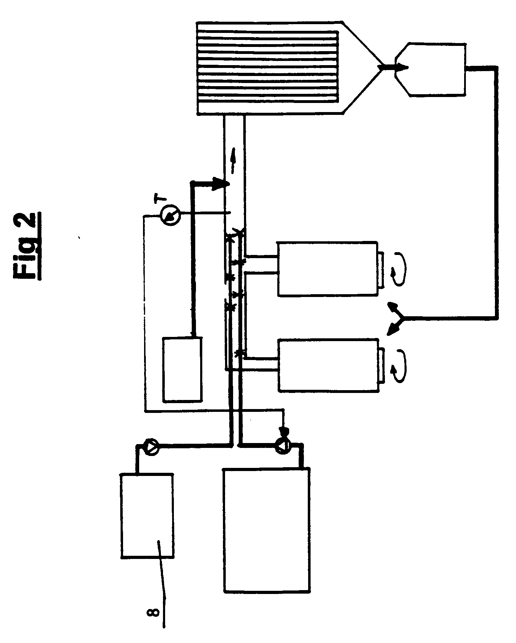

Sehr vorteilhafte Zuschlagstoffe sind Emulsionen aus Wasser mit organischen Stoffen wie beispielsweise Zerspan- und Walzemulsionen, welche bei solchen Temperaturen in den Abgaskanal zugegeben werden, bei denen zwar das Wasser verdampft, die organischen Stoffe aber weder verbrennen noch verdampfen. Daraus folgt, daß die Temperatur des Abgases nach dem Einsprühen der Emulsionen und dem Verdampfen des in den Emulsionen enthaltenen Wassers nicht mehr über etwa 250°C liegen darf. Die Emulsionen können zusammen mit der alkalischen Quenchlösung eingebracht oder besser aus einem separaten Behälter über eine separate Leitung eingesprüht werden (Fig 2). Es bilden sich dünne Ölschichten auf den Staubpartikeln im Abgas. In diesen Ölschichten werden chlororganische Verbindungen, wie z.B. PCDD/PCDF gelöst. Man nutzt also damit neben der Adsorption auch die Absorption als Reinigungsmechanismus. Die Emulsionen enthalten zudem in der Regel auch Stoffe welche die katalytischen Eigenschaften des Staubes im Abgas zur Bildung von PCDD/PCDF unterdrücken. Es können Altölemulsionen, Metallbearbeitungsemulsionen und unbrauchbar gewordene Emulsionen von Walzwerken, insbesondere von Aluminiumwalzwerken, verwendet werden. Das Gewicht der mit den Emulsionen in den Abgaskanal eingebrachten organischen Stoffe kann etwa in der Größenordnung des Gewichtes der eingebrachten alkalischen Stoffe liegen. Die damit in den Filterrückstand eingebrachten organischen Bestandteile stören bei der weiteren Verwendung des Filterrückstandes als Abdecksalz nicht, da diese Stoffe wegen des Staubes aus dem Abgas und wegen des hinzukommenden neuen Abdecksalzes nur in so geringer Konzentration vorkommen, daß sie keine entflammbaren Stäube bilden.

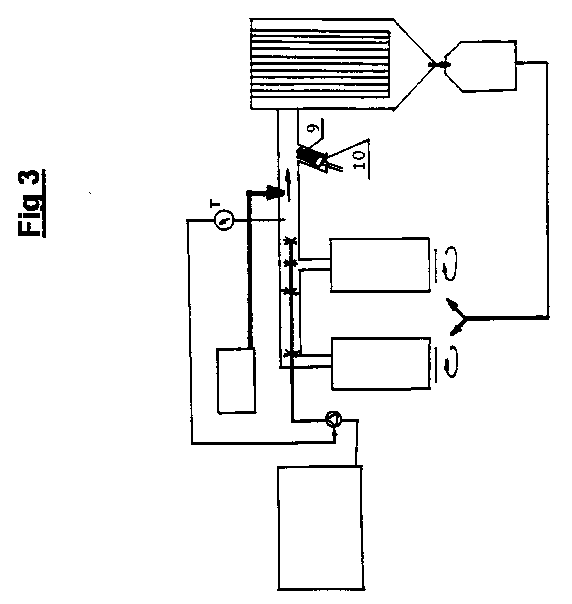

Ein weiterer vorteilhafter zusätzlicher Zuschlagstoff ist Ruß, welcher vorteilhafterweise kurz vor der Stelle an der er in den Abgaskanal eingebracht wird, erzeugt wird (Fig 3). Die Abgastemperatur sollte dort wo der Ruß eingebracht wird vorteilhafterweise nicht mehr über 250°C liegen. Der Ruß kann z.B. mit einem Rußbrenner, beispielsweise einem Azetylenrußbrenner, erzeugt werden. Solcherart hergestellter Ruß ist fast reiner Kohlenstoff, hat eine sehr große spezifische Oberfläche und ist unmittelbar nach seiner Entstehung auch reaktiv. Damit hat er hervorragend gute Adsorptionseigenschaften. Vorteilhaft an Ruß ist weiters, daß er im Gegensatz zu Aktivkohle schwer entflammbar ist, da er, bis auf eine sehr kurze Zeit nach seiner Entstehung von den chemischen Eigenschaften her graphitähnlich ist.

## Patentansprüche

1. Verfahren zur Gewinnung von Sekundäraluminium, bei welchem aluminiumhaltiger Abfall in einem Ofen unter einem überwiegend durch NaCl und/oder KCl gebildeten Abdecksalz aufgeschmolzen wird, den Ofenabgasen in einem Abgaskanal bis 5 g pro Normkubikmeter alkalische Zuschlagstoffe, welche als Kation Natrium und/oder Kalium enthalten, zugegeben werden und die so behandelten Ofenabgase durch Durchleiten durch ein Gewebefilter von Stäuben und Tröpfchen befreit werden, dadurch gekennzeichnet, daß der dabei am Gewebefilter sich ansammelnde Filterrückstand einer später verwendeten Charge Abdecksalz zugegeben wird.

2. Verfahren nach Anspruch 1, dadurch gekennzeichnet, daß die alkalischen Zuschlagstoffe Natriumhydroxid, Natriumcarbonat, Natriumhydrogencarbonat, Natriumsulfid, Natriumsulfit oder analoge Verbindungen auf Kaliumbasis sind, welche zumindest teilweise in wässeriger Lösung in den Abgaskanal eingesprüht werden, wobei so viel Lösung eingesprüht wird, daß durch Verdampfen des Wassers die Temperatur des Abgases auf 150 bis 300°C abgekühlt wird und wobei insgesamt eine so große Menge alkalischer Zuschlagstoffe eingesprüht wird, daß im Filterrückstand ein Überschuß an alkalischen Komponenten enthalten ist.

3. Verfahren nach Anspruch 2, dadurch gekennzeichnet, daß zusätzlich zu den alkalischen Zuschlagstoffen eine Emulsion (8) aus Wasser mit organischen Stoffen in den Abgaskanal eingesprüht wird.

4. Verfahren nach Anspruch 3, dadurch gekennzeichnet, daß als Emulsion (8) bzw. für die organischen Stoffe in der Emulsion (8) unbrauchbar gewordene, ursprünglich für einen anderen Zweck verwendete Emulsionen bzw. Öle verwendet werden.

5. Verfahren nach Anspruch 2, dadurch gekennzeichnet, daß nach dem Bereich im Abgaskanal, in welchem das Abgas durch Einsprühen der wässerigen alkalischen Lösung abgekühlt wurde, aber vor dem Filter (6) Ruß (9) zugegeben wird.

6. Verfahren nach Anspruch 5, dadurch gekennzeichnet, daß der Ruß (9) nahe an der Stelle seines Eintritts in den Abgaskanal durch einen Rußbrenner (10) erzeugt wird.

## Claims

1. Method for obtaining secondary aluminium, wherein waste containing aluminum is melted in a furnace below a covering salt which is formed substantially by NaCl and/or KCl, alkali additives, which contain sodium and/or potassium as a cation, are added to the furnace waste gases in a waste gas duct up to 5 g per standard cubic meter and dust and droplets are removed from the furnace waste gases treated in this manner by passing said waste gases through a textile filter, characterised in that the filter residue which collects in so doing at the textile filter is added to a subsequently used batch of covering salt.

2. Method according to claim 1, characterised in that the alkali additives are sodium hydroxide, sodium carbonate, sodium hydrogen carbonate, sodium sulphide, sodium sulphite or similar compounds on a potassium base, which are sprayed at least partially in an aqueous solution into the waste gas duct, wherein the quantity of the solution sprayed in is such that the temperature of the waste gas is cooled to 150 to 300°C by evaporating the water and wherein overall the quantity of alkali additive being sprayed in is such that an excess of alkali components is contained in the filter residue.

3. Method according to claim 2, characterised in that in addition to the alkali additives an emulsion (8) consisting of water with organic substances is sprayed into the waste gas duct.

4. Method according to claim 3, characterised in that emulsions or oils which were originally used for another purpose and which have become unusable are used as an emulsion (8) and/or for the organic substances in the emulsion (8).

5. Method according to claim 2, characterised in that soot (9) is added after the region in the waste gas duct, in which the waste gas has been cooled by means of spraying the aqueous alkali solution, but before the filter (6).

6. Method according to claim 5, characterised in that the soot (9) is produced in the proximity of its point of entry into the waste gas duct by means of a soot burner (10).

## Revendications

1. Procédé d'obtention d'aluminium secondaire, dans lequel des déchets contenant de l'aluminium sont fondus dans un four, sous un sel de couverture formé principalement du NaCl et/ou du KCl, aux gaz effluents du four dans un conduit d'évacuation des gaz étant ajoutés jusqu'à 5 g par mètre cube normal d'additifs alcalins qui contiennent comme cations, du sodium et/ou du potassium, et les gaz effluents du four ainsi traités étant débarrassés des poussières et des gouttelettes par passage à travers un filtre en tissu, caractérisé en ce que le refus recueilli sur le filtre en tissu est ajouté à une charge de sel de couverture utilisée ultérieurement.

2. Procédé selon la revendication 1, caractérisé en ce que les additifs alcalins sont de l'hydroxyde de sodium, du carbonate de sodium, du carbonate hydrogéné de sodium, du sulfure de sodium, du sulfite de sodium ou des composés similaires à base de potassium, qui sont pulvérisés au moins partiellement en solution aqueuse dans le conduit d'évacuation des gaz, la solution étant pulvérisée en une quantité suffisante pour que par évaporation de l'eau, la température des gaz effluents soit abaissée pour atteindre 150 à 300 °C et au total une quantité suffisamment grande d'additifs alcalins étant pulvérisée pour que le refus du filtre contienne un excédent de composants alcalins.

3. Procédé selon la revendication 2, caractérisé en ce qu'en plus des additifs alcalins il est pulvérisé dans le conduit d'évacuation des gaz une émulsion (8) faite d'eau avec des substances organiques.

4. Procédé selon la revendication 3, caractérisé en ce qu'on utilise comme émulsion (8) ou pour les substances organiques dans l'émulsion (8) des émulsions ou des huiles devenues inutilisables, utilisées initialement dans un autre but.

5. Procédé selon la revendication 2, caractérisé en ce qu'après la zone du conduit d'évacuation des gaz dans laquelle les gaz effluents ont été refroidis par pulvérisation de la solution alcaline aqueuse, mais avant le filtre (6), on ajoute de la suie (9).

6. Procédé selon la revendication 5, caractérisé en ce que la suie (9) est produite par un brûleur à suie (10), au voisinage du point de son entrée dans le conduit d'évacuation des gaz.
